(19) Europäisches Patentamt
European Patent Office
Office européen des brevets

(11) **EP 4 593 304 A1**

(12) **EUROPEAN PATENT APPLICATION**
published in accordance with Art. 153(4) EPC

(43) Date of publication:
**30.07.2025 Bulletin 2025/31**

(21) Application number: **23881588.0**

(22) Date of filing: **27.09.2023**

(51) International Patent Classification (IPC):
**H04B 7/185** $^{(2006.01)}$

(52) Cooperative Patent Classification (CPC):
**H04B 7/185; H04W 72/044**

(86) International application number:
**PCT/CN2023/122118**

(87) International publication number:
**WO 2024/088009 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 CN 202211303533**

(71) Applicant: **Huawei Technologies Co., Ltd.**
**Shenzhen, Guangdong 518129 (CN)**

(72) Inventors:
• **KONG, Chuili**
**Shenzhen, Guangdong 518129 (CN)**
• **WANG, Jun**
**Shenzhen, Guangdong 518129 (CN)**
• **LI, Rong**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **BEAM COVERAGE METHOD AND APPARATUS, AND DEVICE**

(57) This application provides a beam coverage method, an apparatus, and a device. In the method, a satellite may determine a first codebook (which may also be considered as an initial codebook) based on a first coverage area, and then determine, based on a satellite motion direction and the first codebook, a second codebook used for data transmission. According to the method, the satellite may first determine the initial codebook, and then design a small quantity of codebooks in the satellite motion direction based on the initial codebook, where the small quantity of codebooks include the second codebook used for data transmission. Therefore, in a satellite motion process, seamless coverage can be implemented based on the small quantity of codebooks. This helps reduce computing overheads and storage overheads of the satellite.

A satellite determines a first codebook based on a first coverage area — S101

The satellite determines a second codebook based on a satellite motion direction and the first codebook — S102

The satellite performs data transmission based on the second codebook — S103

FIG. 5

# Description

This application claims priority to Chinese Patent Application No. 202211303533.8, filed with the China National Intellectual Property Administration on October 24, 2022 and entitled "BEAM COVERAGE METHOD, APPARATUS, AND DEVICE", which is incorporated herein by reference in its entirety.

## TECHNICAL FIELD

This application relates to the field of communication technologies, and in particular, to a beam coverage method, an apparatus, and a device.

## BACKGROUND

In a satellite system, the satellite system needs to cover a large area, but cannot simultaneously cover the entire coverage area by emitting beams due to restrictions of a satellite load capability. Therefore, a broadcast beam in a satellite inherits a new radio (new radio, NR) feature of time-division scanning, for coverage of the entire satellite system through beam scanning in a time-division manner. However, movement of the satellite causes deviation of a beam coverage area originally designed based on a satellite stationary state. As a result, the satellite system cannot cover the original area. To resolve the problem of coverage hole, currently, based on coverage of the satellite, a codebook set may be calculated in advance, to be stored in a satellite base station. However, a currently designed codebook set stores a large quantity of codebooks, resulting in excessively high storage overheads of the satellite. In addition, the satellite needs to have an efficient search algorithm, to quickly find a codebook that matches an actual beam direction in a large codebook set, resulting in excessively high computing overheads of the satellite.

## SUMMARY

This application provides a beam coverage method, an apparatus, and a device. In the method, a codebook is designed based on a satellite motion direction, to help reduce computing overheads and storage overheads of a satellite.

According to a first aspect, this application provides a beam coverage method. The method may be applied to a satellite. The satellite has a function of an access network device, for example, may connect a terminal device to a radio access network. Specifically, the method is performed by a satellite, may be performed by a component (for example, a processor, a chip, or a chip system) of the satellite, or may be implemented by a logic module or software that can implement all or some functions of the satellite. The satellite determines a first codebook based on a first coverage area, determines a second codebook based on a satellite motion direction and the first codebook, and performs data transmission based on the second codebook.

In the method, the satellite may first determine the first codebook, and then design a small quantity of codebooks in the satellite motion direction based on the first codebook. The small quantity of codebooks include the second codebook (namely, a codebook used for data transmission at a current moment). Therefore, in a satellite motion process, seamless coverage can be implemented based on the small quantity of codebooks. This helps reduce computing overheads and storage overheads of the satellite.

In a possible implementation, the satellite obtains, based on the satellite motion direction and a first beam set or a first beam position set corresponding to the first codebook, a second beam set or a second beam position set that is adjacent to the first beam set or the first beam position set for the first time in the satellite motion direction, determines a scanning granularity based on a codebook storage requirement and a signal-to-noise ratio fluctuation requirement, and determines the second codebook based on the scanning granularity, a codebook corresponding to the second beam set or the second beam position set, and the first codebook.

In the method, how the satellite determines the second codebook based on the satellite motion direction and the first codebook is specifically described. For example, the satellite obtains, in the satellite motion direction based on the first beam set corresponding to the first codebook, the second beam set that is adjacent to the first beam set for the first time, so that interpolation processing can be performed between the first beam set and the second beam set based on the scanning granularity, to obtain a small quantity of other codebooks (including the second codebook). This helps reduce the computing overheads and the storage overheads of the satellite.

In a possible implementation, the satellite determines the first codebook based on the first coverage area and an orientation of a satellite antenna panel, or determines the first codebook based on the first coverage area, a rotation speed of the earth, and an earth beam position.

In the method, the satellite may determine the first codebook in two different manners, including a manner based on the orientation of the satellite antenna panel (which may be referred to as satellite-fixed, satellite-fixed) or a manner based on the earth beam position (which may be referred to as earth-fixed, earth-fixed). The first codebook may also be referred to as an initial codebook, which helps the satellite implement coverage.

In a possible implementation, when the satellite uses the manner based on the orientation of the satellite antenna panel, the satellite determines an angle parameter of each beam in the first beam set based on the orientation of the satellite antenna panel, and obtains, based on the angle parameter of each beam in the first beam set, each beam that is adjacent to each beam in the first beam set for the first time in the satellite motion direction, that is, obtains the second beam set. The second beam set includes each beam that is adjacent to each beam in the first beam set for the first time in the satellite motion direction.

In the method, the satellite may determine the angle parameter of the beam in advance based on a beam layout in the satellite-fixed manner, without considering any geographical position information of the ground. Therefore, implementation complexity is low.

In a possible implementation, when the satellite uses the manner based on the orientation of the satellite antenna panel, the satellite determines an angle parameter of each beam position in the first beam position set based on the satellite motion direction and the rotation speed of the earth, and obtains, based on the angle parameter of each beam position in the first beam position set, each beam position that is adjacent to each beam position in the first beam position set for the first time in the satellite motion direction, that is, obtains the second beam position set. The second beam position set includes each beam position that is adjacent to each beam position in the first beam position set for the first time in the satellite motion direction.

In this method, the satellite may use the earth-fixed manner. When the satellite searches for a connection line between two beam positions on a surface of the earth as the satellite motion direction, impact of rotation of the earth needs to be considered, and a beam position layout needs to be well planned. Therefore, the earth-fixed manner is more complex in implementation than the satellite-fixed manner, but the earth-fixed manner is more suitable for an actual scenario, and has more comprehensive coverage.

In a possible implementation, a relationship among the scanning granularity, the signal-to-noise ratio fluctuation requirement, and the codebook storage requirement satisfies:

when a first scanning granularity is less than a second scanning granularity, a first signal-to-noise ratio fluctuation requirement is less than a second signal-to-noise ratio fluctuation requirement, and a first codebook storage requirement is greater than a second codebook storage requirement.

In this method, to reduce the storage overheads, a large scanning granularity may be used. However, the large scanning granularity causes a large signal-to-noise ratio fluctuation range. Therefore, a tradeoff needs to be made between the signal-to-noise ratio fluctuation requirement and the codebook storage requirement.

In a possible implementation, the satellite receives a signal-to-noise ratio fluctuation requirement update request message, where the signal-to-noise ratio fluctuation requirement update request message includes an absolute value of the scanning granularity or an updated value of the scanning granularity, updates the scanning granularity based on the absolute value of the scanning granularity or the updated value of the scanning granularity, and determines an updated second codebook based on an updated scanning granularity.

In the method, related signaling for updating the signal-to-noise ratio fluctuation requirement is transmitted through an air interface. This helps adapt to the signal-to-noise ratio requirement.

According to a second aspect, this application provides another beam coverage method. The method may be performed by a terminal device, may be performed by a component (for example, a processor, a chip, or a chip system) of the terminal device, or may be performed by a logic module or software that can implement all or some functions of the terminal device. The terminal device obtains a second codebook, and performs data transmission based on the second codebook.

In the method, the terminal device may directly obtain the second codebook used for data transmission, to implement data transmission between the terminal device and a satellite.

In a possible implementation, the terminal device obtains a first codebook and a scanning granularity, and determines the second codebook based on the first codebook and the scanning granularity.

In the method, the terminal device may perform interpolation processing based on the first codebook (namely, an initial codebook) and the scanning granularity, to obtain the second codebook used for data transmission, so as to implement the data transmission between the terminal device and the satellite.

In a possible implementation, the terminal device sends a signal-to-noise ratio fluctuation requirement update request message to a satellite, where the signal-to-noise ratio fluctuation requirement update request message includes an absolute value of the scanning granularity or an updated value of the scanning granularity.

In the method, related signaling for updating the signal-to-noise ratio fluctuation requirement is transmitted through an air interface. This helps adapt to a signal-to-noise ratio requirement.

According to a third aspect, this application provides a communication apparatus. The communication apparatus may be a satellite, may be an apparatus in the satellite, or may be an apparatus that can be used together with the satellite. In a design, the communication apparatus may include modules that one-to-one correspond to the method/operations/steps/actions according to the first aspect and any possible implementation of the first aspect. The module may be implemented by a hardware circuit, software, or a combination of the hardware circuit and the software. In a design, the communication apparatus may include a processing unit and a communication unit.

For specific descriptions of the method performed by the satellite, refer to the corresponding descriptions in the first aspect and any possible implementation of the first aspect. Details are not described herein again. It may be understood that the communication apparatus may also implement effect that can be implemented in the first aspect.

According to a fourth aspect, this application provides another communication apparatus. The communication apparatus may be a terminal device, an apparatus in the terminal device, or an apparatus that can be used together with the terminal device. In a design, the communication apparatus may include modules that one-to-one correspond to the method/operations/steps/actions according to the second aspect and any possible implementation of the second aspect. The module may be implemented by a hardware circuit, software, or a combination of the hardware circuit and the software. In a design, the communication apparatus may include a processing unit and a communication unit.

For specific descriptions of the method performed by the terminal device, refer to the corresponding descriptions in the second aspect and any possible implementation of the second aspect. Details are not described herein again. It may be understood that the communication apparatus may also implement effect that can be implemented in the second aspect.

According to a fifth aspect, this application provides a communication apparatus, including a memory, a processor, and a communication interface. The communication interface is configured to receive a signal or send a signal, the memory is configured to store instructions or a computer program, and the processor is configured to execute the computer program or the instructions stored in the memory, to enable the communication apparatus to perform the method according to the first aspect and any possible implementation of the first aspect.

According to a sixth aspect, this application provides a communication apparatus, including a memory, a processor, and a communication interface. The communication interface is configured to receive a signal or send a signal, the memory is configured to store instructions or a computer program, and the processor is configured to execute the computer program or the instructions stored in the memory, to enable the communication apparatus to perform the method according to the second aspect and any possible implementation of the second aspect.

According to a seventh aspect, this application provides a computer-readable storage medium. The computer-readable storage medium stores instructions, and when the instructions are run on a computer, the computer is enabled to perform the method according to the first aspect or the second aspect, and any possible implementation of the first aspect or the second aspect.

According to an eighth aspect, this application provides a chip system. The chip system includes a processor and an interface, and may further include a memory, configured to implement functions in the method according to the first aspect or the second aspect, and any possible implementation of the first aspect or the second aspect. The chip system may include a chip, or may include a chip and another discrete component.

According to a ninth aspect, this application provides a computer program product, including instructions. When the instructions are run on a computer, the computer is enabled to perform the method according to the first aspect or the second aspect, and any possible implementation of the first aspect or the second aspect.

## BRIEF DESCRIPTION OF DRAWINGS

FIG. 1 is a diagram of a communication system according to this application;
FIG. 2 is a diagram of a coverage area formed by a satellite on a surface of the earth;
FIG. 3a is a diagram in which a coverage area formed on a surface of the earth deviates in a satellite motion process;
FIG. 3b is another diagram in which a coverage area formed on a surface of the earth deviates in a satellite motion process;
FIG. 4a is a diagram of a codebook according to this application;
FIG. 4b is a diagram of a plurality of codebooks according to this application;
FIG. 5 is a schematic flowchart of a first beam coverage method according to this application;
FIG. 6 is another diagram of a plurality of codebooks according to this application;
FIG. 7 is a diagram of a relationship between a scanning granularity and an SNR;
FIG. 8 is a diagram of performing interpolation processing between beams according to this application;
FIG. 9 is a diagram of a cyclic codebook according to this application;
FIG. 10 is a diagram of comparison of codebook interpolation processing solutions according to this application;
FIG. 11 is a schematic flowchart of a second beam coverage method according to this application;
FIG. 12 is a schematic flowchart of a third beam coverage method according to this application;
FIG. 13 is a schematic flowchart of a fourth beam coverage method according to this application;
FIG. 14 is a schematic flowchart of a fifth beam coverage method according to this application;
FIG. 15 is a diagram of an apparatus according to this application; and
FIG. 16 is a diagram of a device according to this application.

## DESCRIPTION OF EMBODIMENTS

In this application, a character "/" may indicate an "or" relationship between associated objects. For example, A/B may indicate A or B. In addition, a term "and/or" may indicate that there are three relationships between associated objects. For example, A and/or B may indicate the following three cases: Only A exists, both A and B exist, and only B exists, where A and B may be singular or plural. For ease of description of technical solutions of this application, in this application, terms such as "first" and "second" may be used to distinguish between technical features with same or similar functions. The terms such as "first" and "second" do not limit a quantity and an execution sequence, and the terms such as "first" and "second" do not indicate a definite difference. In this application, a term like "example" or "for example" indicates an example, an illustration, or a description. Any embodiment or design scheme described as an "example" or "for example" should not be explained as being more preferred or having more advantages than another embodiment or design scheme. Use of the term like "example" or "for example" is intended to indicate a relative concept in a specific manner for ease of understanding.

The following describes the technical solutions of this application with reference to accompanying drawings.

For example, to resolve a problem that a large quantity of codebooks are stored to meet a coverage requirement and search needs to be performed in the large quantity of codebooks in a satellite motion process, this application provides a beam coverage method. The method helps reduce computing overheads and storage overheads of a satellite.

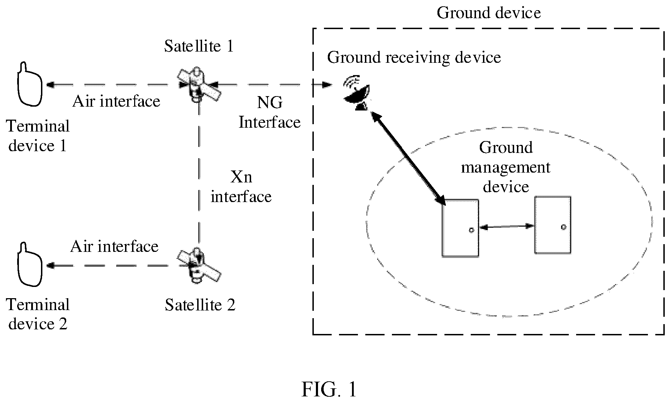

The beam coverage method provided in this application may be applied to a communication system, and specifically, may be applied to a satellite communication system. For example, FIG. 1 is a diagram of a communication system according to this application. The communication system includes a terminal device (for example, a terminal device 1 and a terminal device 2 in FIG. 1) and a satellite (for example, a satellite 1 and a satellite 2 in FIG. 1). The terminal device is connected to the satellite through an air interface, and the air interface is a radio link between the terminal device and the satellite. The satellites are connected to each other through an Xn interface, and the Xn interface is mainly used for signaling interaction like handover. Optionally, the communication system further includes a ground device (for example, including a ground control device and a ground receiving device). The ground device is connected to the satellite through an NG interface, and the NG interface is used to exchange signaling like non-standalone (non-standalone, NSA) signaling of a core network and service data of a user.

The communication system mentioned in this application includes but is not limited to: a narrowband-internet of things (narrowband-Internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, three application scenarios of a 5G mobile communication system: enhanced mobile broadband (enhanced mobile broadband, eMBB), ultra-reliable and low-latency communication (ultra-reliable and low-latency communication, URLLC), and enhanced machine-type communication (enhanced machine-type communication, eMTC), and a future communication system (for example, 6G/7G).

The terminal device is also be referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved PLMN network, a terminal device in a future communication system, or the like.

The satellite in this application has a function of an access network device. Specifically, the access network device, also referred to as a base station, is a radio access network (radio access network, RAN) node (or device) that connects the terminal device to a wireless network. In other words, the satellite in this application may connect the terminal device to the RAN, and may also be referred to as a satellite base station. For example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle-to-everything (vehicle-to-everything, V2X) device), a communication device in device-to-device (device-to-device, D2D) communication, or the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of the remaining protocol layers are distributed in the DU, and the CU centrally controls the DU.

The ground device includes the ground control device, the ground receiving device, and the like. The ground receiving device may also be referred to as a ground station, and is configured to forward signaling and service data between the satellite base station and the core network. The ground control device may be a device in the core network, for example, includes an access and mobility management function (access and management function, AMF) network element and a user plane function (user plant function, UPF) network element. The AMF is used for user access management, security authentication, mobility management, and the like. The UPF is used to manage user plane data transmission, traffic statistics, and the like.

I. Related concepts in this application

1. Beam and coverage area of a satellite

In 5G NR, because a beam is narrow, and one beam cannot cover an entire base station service area, a broadcast beam of the satellite is sent in a scanning manner. Similarly, for a satellite system, the satellite system covers a large area, but cannot simultaneously cover the entire coverage area by emitting beams due to restrictions of a satellite load capability. Therefore, the broadcast beam of the satellite inherits an NR feature of time-division scanning, for coverage of the entire satellite through scanning in a time-division manner. Because the broadcast beam of the satellite needs to complete transmission of a large quantity of signals, duration of a single beam is long. In addition, because the coverage area of the satellite is large, and a link budget is usually poor, a narrow beam is usually used for coverage. However, this may bring thousands of beams for a single satellite.

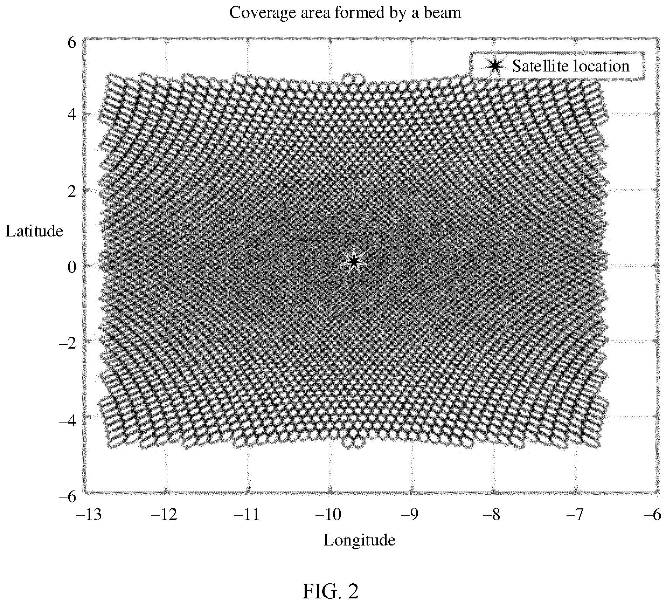

For a large antenna array of the satellite, a beam width of the large antenna array is usually narrow. For example, it is assumed that the beam width of the antenna array is 1.2° (degree). If the antenna array needs to cover an area in a latitude direction of 45° and a longitude direction of 33°, and beams are arranged according to an existing protocol, 4,761 beams need to be emitted for the antenna array. If each beam stays for 5 milliseconds (ms), the satellite may use a (preconfigured) static weight to scan broadcast beams in a specific sequence. In a satellite stationary state, a coverage area formed by the satellite on a surface of the earth is shown in FIG. 2.

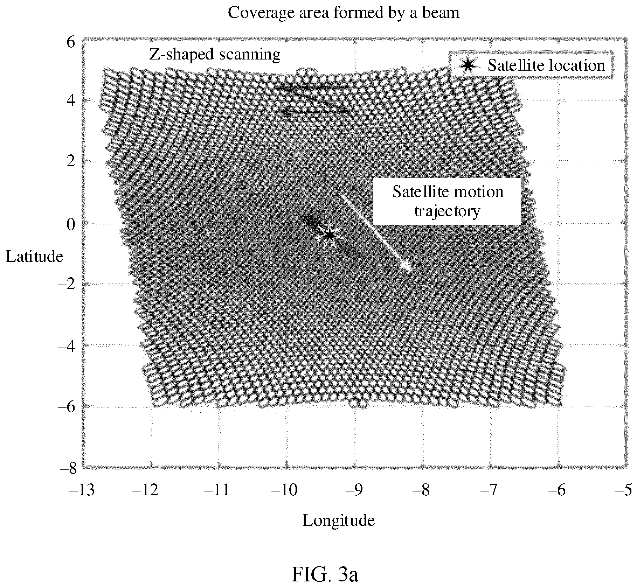

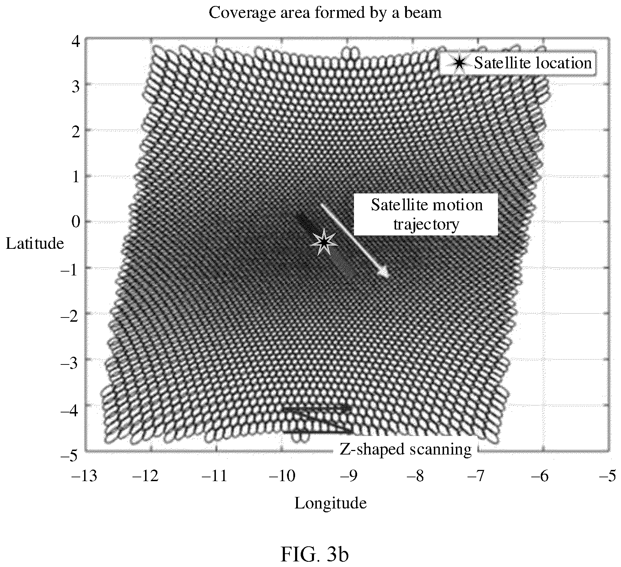

However, movement of the satellite causes deviation of the coverage area originally designed based on the satellite stationary state, as shown in FIG. 3a or FIG. 3b. For example, when a beam scanning direction is opposite to a satellite motion direction, compared with the coverage area shown in FIG. 2, a coverage area shown in FIG. 3a is stretched in the satellite motion direction, and a shape changes from a rectangle to a parallelogram. For another example, when the beam scanning direction is the same as the satellite motion direction, compared with the coverage area shown in FIG. 2, a coverage area shown in FIG. 3b is compressed in the satellite motion direction, and the shape changes from the rectangle to a parallelogram. Therefore, movement of the satellite causes changes of the coverage area formed by the satellite, which is no longer an originally designed rectangular area. As a result, the satellite cannot implement seamless coverage.

2. Codebook

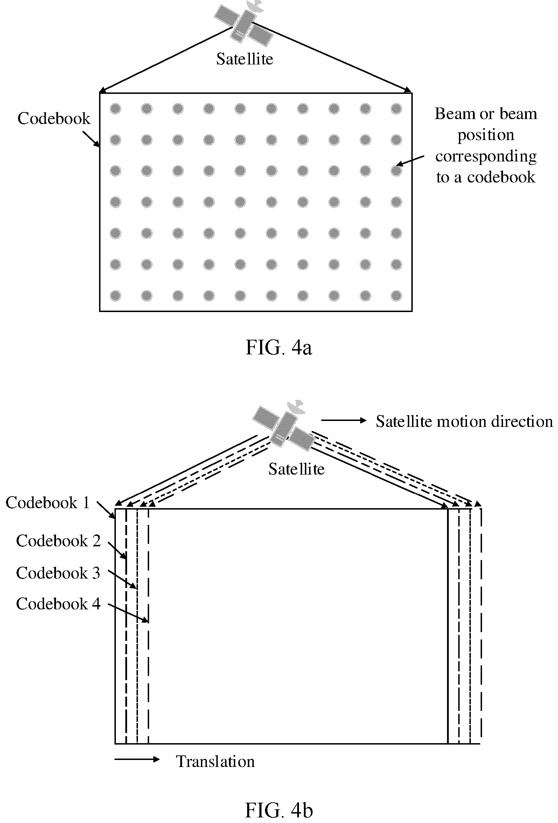

In this application, one codebook corresponds to one beam set or one beam position set. For example, FIG. 4a is a diagram of a codebook according to this application. The codebook corresponds to one beam set or beam position set, and the beam set includes a plurality of beams (or the beam position set includes a plurality of beam positions). For example, it is assumed that the beam set corresponding to the codebook shown in FIG. 4a includes 70 beams. The codebook serves a coverage area of the ground by using the 70 beams.

Specifically, the codebook includes an angle parameter (the angle parameter is also referred to as a beam direction) of the beam set corresponding to the codebook, or includes an angle parameter of the beam position set corresponding to the codebook. For example, it is assumed that the beam set corresponding to the codebook shown in FIG. 4a includes 70 beams. The codebook includes angle parameters of the 70 beams. It is assumed that the angle parameter of each beam includes a pitch angle and an azimuth. For example, an angle parameter $\omega_i$ of an $i^{th}$ beam is represented as $\omega_i = (\theta_i, \varphi_i)$, where $\theta_i$ represents the pitch angle of the $i^{th}$ beam, and $\varphi_i$ represents the azimuth of the $i^{th}$ beam. In this case, the codebook may be represented as an angle parameter set formed by the angle parameters of the 70 beams, for example, represented as $W = \{\omega_1, \omega_2, ..., \omega_{70}\}$.

Optionally, the satellite may store a plurality of codebooks. As the satellite moves, the satellite may implement the seamless coverage by using different codebooks. For example, FIG. 4b is a diagram of the plurality of codebooks according to this application. It is assumed that the plurality of codebooks in FIG. 4b include a codebook 1 to a codebook 4. Each codebook corresponds to one beam set or beam position set. For example, a beam set or beam position set corresponding to the codebook 1 is shown in FIG. 4a. Similarly, beam sets or beam position sets corresponding to the codebook 2 to the codebook 4 are also shown in FIG. 4a, but the beam sets or the beam position sets are translated.

II. Beam coverage method provided in this application

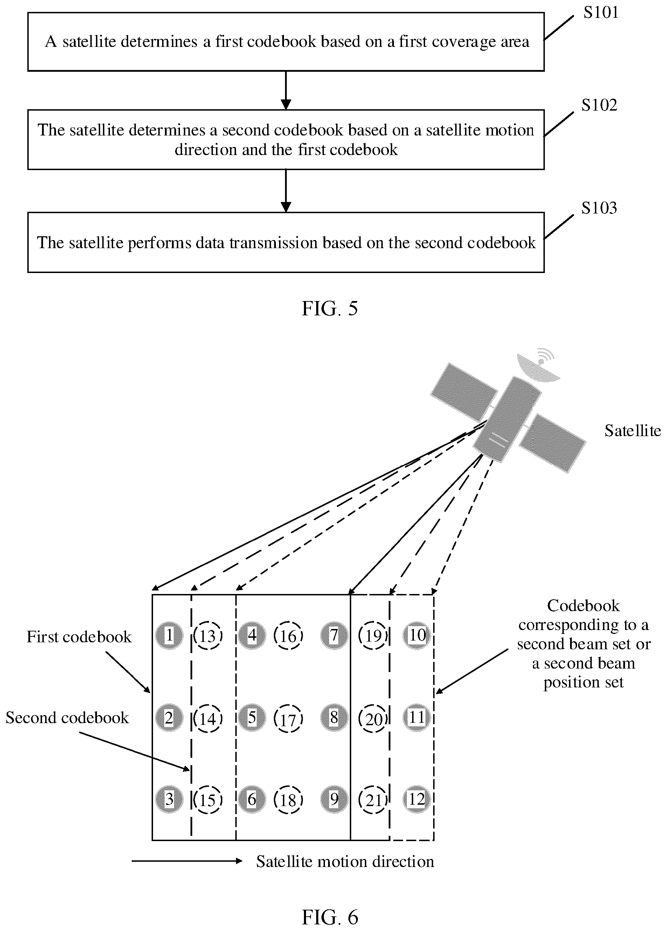

Example 1: FIG. 5 is a schematic flowchart of a first beam coverage method according to this application. The beam coverage method is applied to the communication system shown in FIG. 1. For example, the beam coverage method may be performed by a satellite, and the method includes the following steps.

S101: The satellite determines a first codebook based on a first coverage area.

The first coverage area is a coverage area formed by the satellite by emitting a beam on the ground. For example, the first coverage area may be a coverage area formed by the satellite by emitting the beam on the ground when the satellite moves to a specified position (in this case, it is assumed that the satellite may be considered to be in a stationary state at the specified position in a very short time). Optionally, the first coverage area may be a large area. For example, the first coverage area may include but is not limited to a desert area, a marine area, an urban area, a rural area, and the like. Alternatively, the first coverage area may be a small area. For example, when a terminal device triggers satellite handover, the first coverage area may include but is not limited to an area like a stadium or a tunnel. The first codebook is a codebook corresponding to a beam set or a beam position set used when the satellite serves the first coverage area.

That the satellite determines the first codebook based on the first coverage area may include the following two cases:

Case 1: The satellite determines the first codebook based on the first coverage area and an orientation of a satellite antenna panel. In other words, the satellite determines the first codebook in a manner based on the orientation of the satellite antenna panel (which may be referred to as satellite-fixed, satellite-fixed).

For example, the satellite determines a minimum gain of the beam based on a coverage requirement of the first coverage area, to determine maximum widths of a vertical plane and a horizontal plane of the beam; and determines a quantity of required beams and an angle parameter of each beam based on the maximum widths of the vertical plane and the horizontal plane of the beam and the coverage requirement of the first coverage area, to determine the angle parameter of each beam included in the first codebook. In the case 1, the satellite determines the angle parameter of the beam in advance based on a beam layout in the satellite-fixed manner, without considering any geographical position information of the ground. Therefore, implementation complexity is low.

Case 2: The satellite determines the first codebook based on the first coverage area, a rotation speed of the earth, and an earth beam position. In other words, the satellite determines the first codebook in a manner based on the earth beam position (which may be referred to as earth-fixed, earth-fixed).

For example, the satellite determines the minimum gain of the beam based on the coverage requirement of the first coverage area, to determine the maximum widths of the vertical plane and the horizontal plane of the beam; and determines a quantity of required beam positions and an angle parameter of each beam position based on the maximum widths of the vertical plane and the horizontal plane of the beam, the coverage requirement of the first coverage area, the rotation speed of the earth, and the earth beam position, to determine the angle parameter of each beam position included in the first codebook. In the case 2, the satellite uses the earth-fixed manner. Impact of rotation of the earth needs to be considered, and a beam position layout needs to be well planned. Therefore, the earth-fixed manner is more complex in implementation than the satellite-fixed manner, but the earth-fixed manner is more suitable for an actual scenario, and has more comprehensive coverage.

S102: The satellite determines a second codebook based on a satellite motion direction and the first codebook.

S103: The satellite performs data transmission based on the second codebook.

The second codebook is a codebook corresponding to a beam set or a beam position set used when the satellite serves a specific coverage area in a satellite motion process. The specified coverage area may be the first coverage area; or the specified coverage area may be a second coverage area formed by the satellite by emitting the beam on the ground in the satellite motion direction, and the second coverage area is different from the first coverage area.

A direction in the satellite motion direction may be the same as and parallel to the satellite motion direction, or may be the same as and has a specific included angle with the satellite motion direction. For example, for the plurality of codebooks shown in FIG. 4b, the satellite may determine the codebook 2 based on the codebook 1 and the direction the same as and parallel to the satellite motion direction. In other words, the codebook 2 may be considered as a codebook obtained by translating the codebook 1 in the direction the same as and parallel to the satellite motion direction. Similarly, the codebook 3 and the codebook 4 may also be obtained.

Specifically, that the satellite determines the second codebook based on the satellite motion direction and the first codebook includes the following steps:

S102-1: The satellite obtains, based on the satellite motion direction and a first beam set or a first beam position set corresponding to the first codebook, a second beam set or a second beam position set that is adjacent to the first beam set or the first beam position set for the first time in the satellite motion direction.

S102-2: The satellite determines a scanning granularity based on a codebook storage requirement and a signal-to-noise ratio fluctuation requirement.

S102-3: The satellite determines the second codebook based on the scanning granularity, a codebook corresponding to the second beam set or the second beam position set, and the first codebook.

S102-1 may include the following two cases:

Case 1: The satellite determines an angle parameter of each beam in the first beam set based on the orientation of the satellite antenna panel; and obtains, based on the angle parameter of each beam in the first beam set, each beam that is adjacent to each beam in the first beam set for the first time in the satellite motion direction, where the second beam set includes each beam that is adjacent to each beam in the first beam set for the first time in the satellite motion direction.

The orientation of the satellite antenna panel may also be indicated by an angle parameter including a pitch angle and an azimuth of the antenna panel. The satellite may determine a pitch angle and an azimuth of the emitted beam (namely, a pitch angle and an azimuth of each beam in the first beam set) based on the pitch angle and the azimuth of the satellite antenna panel. Based on the pitch angle and the azimuth of each beam in the first beam set, each beam that is adjacent to each beam in the first beam set for the first time in the satellite motion direction is obtained, and a pitch angle and an azimuth of the beam are obtained.

For example, FIG. 6 is another diagram of a plurality of codebooks according to this application. It is assumed that a circle in FIG. 6 indicates a beam. The plurality of codebooks may correspond to a plurality of beam sets. It is assumed that the first beam set corresponding to the first codebook includes nine beams (namely, a beam 1 to a beam 9) in a solid-line block. There are nine beams that are adjacent to beams in the first beam set for the first time in the satellite motion direction, that is, the second beam set includes nine beams (namely, a beam 4 to a beam 12) in a short dashed-line block, as shown in FIG. 6. Because the case 1 is based on the satellite-fixed manner, the impact of the rotation of the earth does not need to be considered, and the second beam set may be directly determined based on the satellite motion direction and the orientation of the satellite antenna panel. For example, the first codebook is represented as $W^1 = \{\omega_1, \omega_2, \omega_3, \omega_4, \omega_5, \omega_6, \omega_7, \omega_8, \omega_9\}$, and the codebook corresponding to the second beam set is represented as $W^2 = \{\omega_4, \omega_5, \omega_6, \omega_7, \omega_8, \omega_9, \omega_{10}, \omega_{11}, \omega_{12}\}$, where $\omega_i = (\theta_i, \varphi_i)$, $\theta_i$ represents a pitch angle of an $i^{th}$ beam, $\varphi_i$ represents an azimuth of the $i^{th}$ beam, and $i = 1,2,3,...,12$.

Case 2: The satellite determines an angle parameter of each beam position in the first beam position set based on the satellite motion direction and the rotation speed of the earth; and obtains, based on the angle parameter of each beam position in the first beam position set, each beam position that is adjacent to each beam position in the first beam position set for the first time in the satellite motion direction, where the second beam position set includes each beam position that is adjacent to each beam position in the first beam position set for the first time in the satellite motion direction.

In the case 2, the earth-fixed manner is used. The beam direction is determined based on a satellite position and beam position information on a surface of the earth. Therefore, the impact of the rotation speed of the earth needs to be considered. Usually, the rotation speed of the earth is about 466 meters per second (m/s). When the beam direction is determined, the angle parameter of the beam position is also determined. In other words, the satellite determines the angle parameter of each beam position in the first beam position set based on the satellite motion direction and the rotation speed of the earth, where the angle parameter includes a pitch angle and an azimuth of each beam position in the first beam position set.

For example, it is assumed that the circle in FIG. 6 indicates a beam position. The plurality of codebooks may correspond to a plurality of beam position sets. It is assumed that the first beam position set corresponding to the first codebook includes nine beam positions (namely, a beam position 1 to a beam position 9) in a solid-line block. There are nine beams that are adjacent to beams in the first beam position set for the first time in the satellite motion direction, that is, the second beam position set includes nine beam positions (namely, a beam position 4 to a beam position 12) in a short dashed-line block, as shown in FIG. 6. For the case 2, the impact of the rotation of the earth is considered for each beam position in FIG. 6. For example, the first codebook is represented as $W^1 = \{\omega_1, \omega_2, \omega_3, \omega_4, \omega_5, \omega_6, \omega_7, \omega_8, \omega_9\}$, and the codebook corresponding to the second beam position set is represented as $W^2 = \{\omega_4, \omega_5, \omega_6, \omega_7, \omega_8, \omega_9, \omega_{10}, \omega_{11}, \omega_{12}\}$, where $\omega_i = (\theta_i, \varphi_i)$, $\theta_i$ represents a pitch angle of an $i^{th}$ beam position, $\varphi_i$ represents an azimuth of the $i^{th}$ beam position, and $i = 1, 2,3,...,12$.

For S102-2, the scanning granularity is a parameter determined by the satellite based on a tradeoff between the codebook storage requirement and the signal-to-noise ratio fluctuation requirement. When the satellite performs beam scanning, a quantity of linear interpolations is determined between adjacent beams based on the scanning granularity, to determine a quantity of codebooks. The codebook storage requirement is storage overheads generated when the satellite stores the codebook. The signal-to-noise ratio fluctuation requirement is a beam gain of the beam emitted by the satellite to cover a ground area and implement stable communication between the satellite and the terminal device.

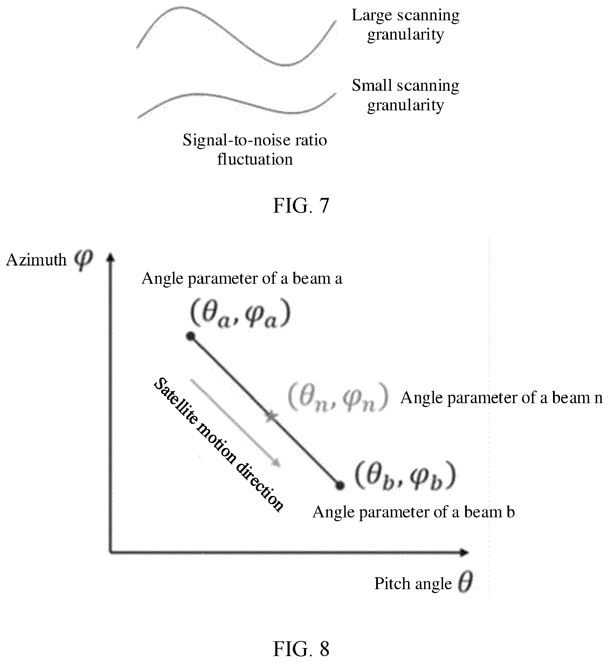

Specifically, a relationship among the scanning granularity, the signal-to-noise ratio fluctuation requirement, and the codebook storage requirement satisfies: When a first scanning granularity is less than a second scanning granularity, a first signal-to-noise ratio fluctuation requirement is less than a second signal-to-noise ratio fluctuation requirement, and a first codebook storage requirement is greater than a second codebook storage requirement. For example, FIG. 7 is a diagram of a relationship between the scanning granularity and an SNR. To reduce the storage overheads of the codebook, a large scanning granularity may be used. However, the large scanning granularity causes a large SNR fluctuation range, as shown in FIG. 7. Therefore, when determining the scanning granularity, the satellite needs to make a tradeoff between the scanning granularity, the signal-to-noise ratio fluctuation requirement, and the codebook storage requirement.

For S102-3, when the scanning granularity is determined, the satellite may perform interpolation processing between the first codebook and the codebook corresponding to the second beam set or the second beam position set, to determine one or more codebooks, and the one or more codebooks include the second codebook. The following describes an interpolation processing process in detail. The following uses the beam as an example for description, and a method for obtaining the beam position is similar.

First, a method for performing interpolation processing between two beams is described. For example, FIG. 8 is a diagram of performing interpolation processing between beams according to this application. For a single beam a, the satellite may determine a scanning granularity K based on the tradeoff between the codebook storage requirement and the signal-to-noise ratio fluctuation requirement. In addition, a beam b that is adjacent to the beam a for the first time may be found in the satellite motion direction. The satellite may determine a quantity of interpolations M based on the scanning granularity K, and then perform interpolation processing between beam directions of the beam a and the beam b, to obtain angle parameters of other M beams, as shown in FIG. 8. In this application, the interpolation processing may be specifically linear interpolation processing, that is, linear interpolation is performed on a connection line between two coordinate points. The linear interpolation processing may be uniform interpolation (that is, the coordinate points are equally divided on the connection line between the two coordinate points), or may be non-uniform interpolation (that is, the coordinate points are divided on the connection line between the two coordinate points based on different proportions). This is not limited in this application.

For example, a beam n is any one of the M beams obtained by performing interpolation processing by the satellite. In an angle plane shown in FIG. 8, a coordinate point $(\theta_n, \varphi_n)$ corresponding to an angle parameter of the beam n is located on the connection line between the coordinate point $(\theta_a, \varphi_a)$ corresponding to an angle parameter of the beam a and the coordinate point $(\theta_b, \varphi_b)$ corresponding to the beam b, as shown in FIG. 8. In addition, the coordinate point $(\theta_n, \varphi_n)$ corresponding to the angle parameter of the beam n satisfies:

$$\frac{\theta_n - \theta_a}{\theta_b - \theta_a} = \frac{\varphi_n - \varphi_a}{\varphi_b - \varphi_a}$$

, where $\theta_n$ represents a pitch angle of the beam n, $\varphi_n$ represents an azimuth of the beam n, $\theta_a$ represents a pitch angle of the beam a, $\varphi_a$ represents an azimuth of the beam a, $\theta_b$ represents a pitch angle of the beam b, and $\varphi_b$ represents an azimuth of the beam b.

Because one codebook corresponds to one beam set, a method for performing interpolation processing on each beam in one beam set is similar to a method for performing interpolation processing on a single beam. For example, for the first codebook $W^1$ and the codebook $W^2$ corresponding to the second beam set or the second beam position set shown in FIG. 6, a plurality of angle parameters in $W^1$ correspond to a plurality of coordinate points respectively, and a plurality of angle parameters in $W^2$ also correspond to a plurality of coordinate points respectively. It is assumed that a rectangular box in FIG. 6 may be considered as an angle plane. When the quantity of interpolations M corresponding to the scanning granularity is determined (it is assumed that M=1), the satellite may perform interpolation processing between the first codebook and the codebook corresponding to the second beam set or the second beam position set, to obtain the second codebook. It is assumed that the beam set corresponding to the second codebook in FIG. 6 includes nine beams (namely, a beam 13 to a beam 21) in a long dashed-line box. The second codebook may be represented as $W^3 = \{\omega_{13}, \omega_{14}, \omega_{15}, \omega_{16}, \omega_{17}, \omega_{18}, \omega_{19}, \omega_{20}, \omega_{21}\}$.

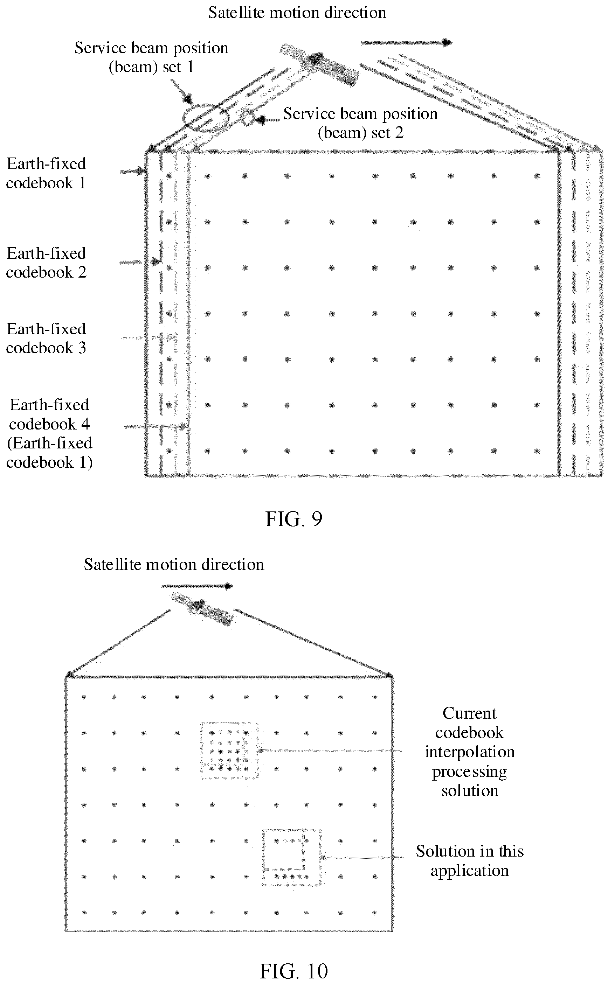

Optionally, when the quantity of interpolations M corresponding to the scanning granularity is greater than 1, that is, when the plurality of codebooks are obtained during interpolation processing, the satellite may cyclically use the plurality of codebooks for data transmission. For example, FIG. 9 is a diagram of a cyclic codebook according to this application. It is assumed that the quantity of interpolations M corresponding to the scanning granularity is equal to 2. The satellite may obtain three codebooks based on the descriptions in S102 and S103, that is, an earth-fixed codebook 1, an earth-fixed codebook 2, and an earth-fixed codebook 3. The earth-fixed codebook 1 is the first codebook, and the earth-fixed codebook 2 and the earth-fixed codebook 3 are other two codebooks obtained by performing interpolation processing, as shown in FIG. 9.

First, the satellite uses the earth-fixed codebook 1 to serve the ground (for example, the first coverage area). As the satellite moves, the satellite is handed over to the earth-fixed codebook 2 to serve the ground. Then, as the satellite further moves, the satellite is handed over to the earth-fixed codebook 3 to serve the ground. After the satellite uses the earth-fixed codebook 3 to serve the ground for a period of time, if a moving distance of the satellite is close to a diameter of a beam position, the satellite needs to initiate inter-satellite handover, that is, the current satellite no longer serves a leftmost column of beam positions in the first coverage area, but a next satellite provides a service. The next satellite continues to serve the first coverage area by using an earth-fixed codebook 4, and the earth-fixed codebook 4 is the same as the earth-fixed codebook 1. In other words, the area served by the satellite is translated, and the satellite may continue to serve the area by using the earth-fixed codebook 1. This process repeats. It should be noted that, as the satellite moves, to perform gaze, a codebook corresponding to a service beam position (beam) set 1 shown in FIG. 9 is updated from the earth-fixed codebook 1 to the earth-fixed codebook 3. When the satellite moves to a coverage area of a service beam position (beam) set 2, a codebook corresponding to the service beam position (beam) set 2 is sequentially updated from the earth-fixed codebook 1 to the earth-fixed codebook 3 again. In other words, the satellite cyclically serves the ground in a sequence of the earth-fixed codebook 1, the earth-fixed codebook 2, and the earth-fixed codebook 3.

Optionally, the satellite may further perform the following steps.

The satellite receives a signal-to-noise ratio fluctuation requirement update request message, where the signal-to-noise ratio fluctuation requirement update request message includes an absolute value of the scanning granularity or an updated value of the scanning granularity.

The satellite updates the scanning granularity based on the absolute value of the scanning granularity or the updated value of the scanning granularity.

The satellite determines an updated second codebook based on an updated scanning granularity.

It is assumed that the terminal device may request the satellite to update the codebook. The following two cases are included:

> Case 1: When the fluctuation range of the signal-to-noise ratio obtained by the terminal device through measurement is large (for example, the fluctuation range of the signal-to-noise ratio is expanded to 3 dB), it indicates that the scanning granularity of the codebook needs to be increased, to reduce the fluctuation of the signal-to-noise ratio.
>
> Case 2: When a link budget of the terminal device is high (that is, the fluctuation of the signal-to-noise ratio is small), the terminal device may request to reduce the scanning granularity of the codebook.

When finding that either of the foregoing two cases exists, the terminal device may request the satellite to update the codebook. Correspondingly, the satellite may receive the signal-to-noise ratio fluctuation requirement update request message from the terminal device.

The signal-to-noise ratio fluctuation requirement update request message includes the following two cases:

> Case 1: The signal-to-noise ratio fluctuation requirement update request message includes the absolute value of the scanning granularity. For example, an information element for transmitting the absolute value of the scanning granularity is defined as codebook_granularity, and a value of the information element is a positive value, and is quantized by using one or more bits (bit).
>
> Case 2: The signal-to-noise ratio fluctuation requirement update request message includes the updated value of the scanning granularity. For example, an information element for transmitting the updated value of the scanning granularity is defined as codebook_granularity_update, and a value of the information element may be a negative value, and is quantized by using one or more bits.

Regardless of whether the satellite uses the solution in the case 1 or the case 2, the satellite and the terminal device may agree on this in advance. For example, if the satellite and the terminal device agree to use the solution in the case 1, the satellite receives the absolute value of the scanning granularity from the terminal device, and updates the scanning granularity based on the absolute value of the scanning granularity.

After updating the scanning granularity, the satellite may determine the updated second codebook based on the updated scanning granularity. For example, for the first codebook $W^1$ and the codebook $W^2$ corresponding to the second beam set or the second beam position set shown in FIG. 6, the plurality of angle parameters in $W^1$ correspond to the plurality of coordinate points, and the plurality of angle parameters in $W^2$ also correspond to the plurality of coordinate points. After the scanning granularity is updated, the satellite may update the quantity of interpolations M corresponding to the scanning granularity (it is assumed that the quantity of interpolations M corresponding to the updated scanning granularity is 2). In this case, the satellite may perform interpolation processing between the first codebook and the codebook corresponding to the second beam set or the second beam position set, to obtain the other two codebooks. The second codebook is one of the other two codebooks, and is used to serve a corresponding ground coverage area.

For S103, that the satellite performs data transmission based on the second codebook includes: For example, the satellite sends, by using the second codebook, data to the terminal device in the coverage area corresponding to the second codebook, or the satellite receives data from the terminal device in the coverage area corresponding to the second codebook. In other words, the satellite provides a service by using the second codebook.

The following analyzes and describes storage overheads reduced by the beam coverage method provided in this application. For comparison, a current codebook interpolation processing solution and storage overheads of the current codebook interpolation processing solution are first described. For example, in the current codebook interpolation processing solution, interpolation processing is performed at a specific granularity in any direction between any adjacent angle parameters $(\theta_n, \varphi_n)$ and $(\theta_{n+1}, \varphi_{n+1})$, to obtain a plurality of codebooks, thereby implementing seamless coverage of a satellite, as shown in FIG. 10. The current codebook interpolation processing solution is essentially that the satellite performs discrete and uniform beam sampling in any direction in two-dimensional beam space. For example, a manner of calculating the storage overheads of the current codebook interpolation processing solution is as follows: It is assumed that a quantity of basic codebooks is 1, a quantity of beams corresponding to the codebook is N, a scanning granularity is K, and a quantity of antennas is X. The storage overheads of the satellite are $XN(K+1)^2$. It can be learned that, for the current codebook interpolation processing solution, as the scanning granularity increases, the storage overheads of the satellite increase rapidly, and a quantity of phase shifters that need to be stored by the satellite also increases rapidly. The phase shifter stored in the satellite described in this application is configured to adjust a direction in which the satellite emits the beam, so that the satellite can cyclically use the plurality of codebooks to cover a ground area.

Through comparison, in the beam coverage method provided in this application, for the beam (or the beam position) a, the beam (or the beam position) b that is adjacent to the beam (or the beam position) for the first time in the satellite motion direction can always be found. In other words, the codebook corresponding to the beam (or the beam position) a may overlap the codebook corresponding to the beam (or the beam position) b in a period of time. In this application, the satellite may directly perform interpolation processing between the codebook corresponding to the beam (or the beam position) a and the codebook corresponding to the beam (or the beam position) b by using a quantity of linear interpolations corresponding to a specific scanning granularity, to obtain a plurality of codebooks, thereby ensuring effect of gazing at the terminal device, as shown in FIG. 10. The beam coverage method provided in this application is essentially that the satellite performs uniform sampling in the satellite motion direction in two-dimensional beam space. For example, a manner of calculating the storage overheads of the beam coverage method provided in this application is as follows: It is assumed that a quantity of basic codebooks is 1, a quantity of beams corresponding to the codebook is N, a scanning granularity is K, and a quantity of antennas is X. The storage overheads of the satellite are $XN(K+1)$. Compared with the current codebook interpolation processing solution, the storage overheads of the beam coverage method provided in this application are reduced by $(K+1)$

times, and an overhead reduction percentage is $\dfrac{K}{K+1}$. For example, if the scanning granularity used by the satellite is K=3, and there are N=4,000 beams in total, a quantity of beams that need to be stored is 64, 000 with the use of the current codebook interpolation processing solution. However, in the beam coverage method provided in this application, a quantity of beams that need to be stored is 16, 000, which accounts for only 25% of original storage. In other words, the overheads are reduced by 75%, and the storage overheads of the satellite are significantly reduced.

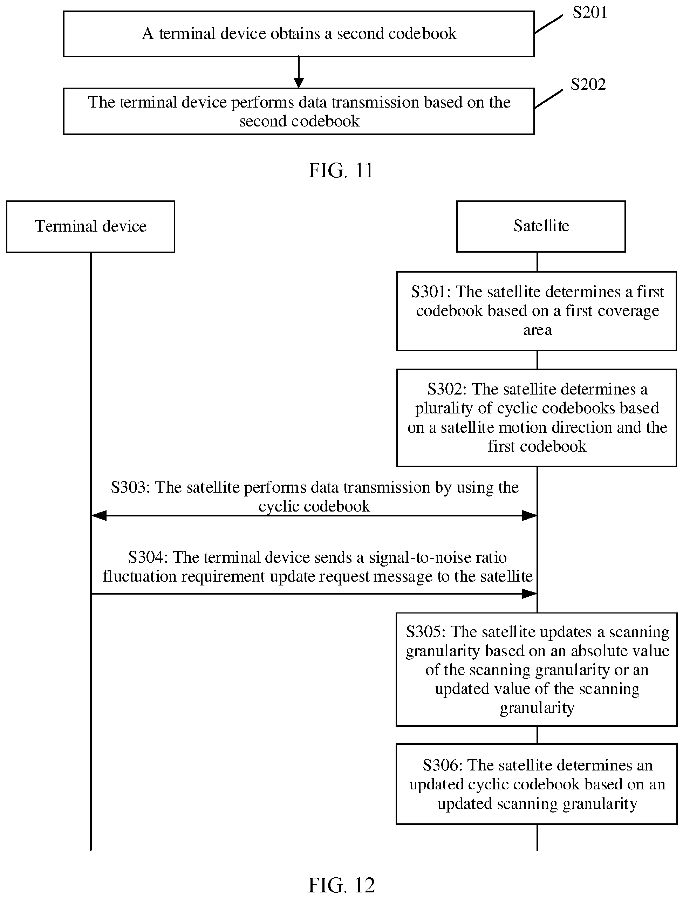

Example 2: FIG. 11 is a schematic flowchart of a second beam coverage method according to this application. The beam coverage method is applied to the communication system shown in FIG. 1. For example, the beam coverage method may be performed by a terminal device, and the method includes the following steps:

> S201: The terminal device obtains a second codebook.
> S202: The terminal device performs data transmission based on the second codebook.

For descriptions of the second codebook, refer to the corresponding descriptions in the embodiment in FIG. 5. Details are not described herein again.

For S201, the terminal device may directly obtain the second codebook. For example, the terminal device receives the second codebook from a satellite. Alternatively, the terminal device may obtain the second codebook through calculation. For example, S201 specifically includes the following steps:

> S201-1: The terminal device obtains a first codebook and a scanning granularity.
> S201-2: The terminal device determines the second codebook based on the first codebook and the scanning granularity.

For S201-1, the terminal device may receive the first codebook and the scanning granularity from the satellite, that is, after determining the first codebook and the scanning granularity, the satellite may directly send the first codebook and the scanning granularity to the terminal device. For S201-2, the terminal device may alternatively determine the second codebook based on the first codebook and the scanning granularity. A specific implementation is similar to the implementation in which the satellite determines the second codebook based on the first codebook and the scanning granularity in Example 1. For example, the terminal device obtains, based on a satellite motion direction and a first beam set or a first beam position set corresponding to the first codebook, a second beam set or a second beam position set that is adjacent to the first beam set or the first beam position set for the first time in the satellite motion direction, and then determines the second codebook based on the scanning granularity, a codebook corresponding to the second beam set or the second beam position set, and the first codebook. For a specific process, refer to the foregoing specific descriptions in S102. Details are not described herein again.

For a specific implementation of S202, refer to the descriptions in S103. Details are not described herein again.

Optionally, the terminal device may further perform the following steps.

The terminal device sends a signal-to-noise ratio fluctuation requirement update request message to the satellite, where the signal-to-noise ratio fluctuation requirement update request message includes an absolute value of the scanning granularity or an updated value of the scanning granularity.

It is assumed that the terminal device may request the satellite to update the codebook. The terminal device may send the signal-to-noise ratio fluctuation requirement update request message to the satellite. For a description and a specific implementation of the signal-to-noise ratio fluctuation requirement update request message, refer to the corresponding descriptions in Example 1. Details are not described herein again.

Optionally, Example 1 and Example 2 in this application may also be combined. In other words, interaction between the satellite and the terminal device may be applied to different network scenarios. The following provides descriptions by using Example 3 to Example 5.

Example 3: It is assumed that a satellite determines a first codebook, and determines and updates a cyclic codebook, and a terminal device requests to update the codebook. For example, FIG. 12 is a schematic flowchart of a third beam coverage method according to this application. The method is implemented through interaction between the satellite and the terminal device, and includes the following steps.

S301: The satellite determines a first codebook based on a first coverage area.

S302: The satellite determines a plurality of cyclic codebooks based on a satellite motion direction and the first codebook.

The plurality of cyclic codebooks include a second codebook.

S303: The satellite performs data transmission by using the cyclic codebook.

S304: The terminal device sends a signal-to-noise ratio fluctuation requirement update request message to the satellite.

The signal-to-noise ratio fluctuation requirement update request message includes an absolute value of a scanning granularity or an updated value of the scanning granularity.

S305: The satellite updates the scanning granularity based on the absolute value of the scanning granularity or the updated value of the scanning granularity.

S306: The satellite determines an updated cyclic codebook based on an updated scanning granularity.

For specific implementations of S301 to S306, refer to the corresponding descriptions in Example 1 and Example 2. Details are not described herein again.

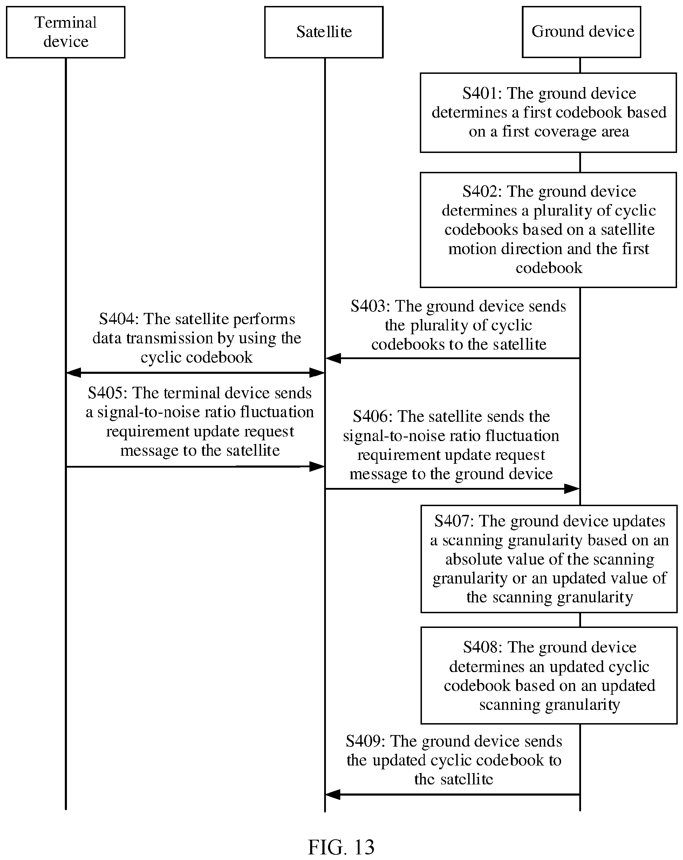

Example 4: It is assumed that a ground device determines a first codebook, and determines and updates a cyclic codebook, a terminal device requests to update the codebook, and a satellite forwards a request message and codebook information. For example, FIG. 13 is a schematic flowchart of a fourth beam coverage method according to this application. The method is implemented through interaction between the satellite, the terminal device, and the ground device, and includes the following steps:

S401: The ground device determines a first codebook based on a first coverage area.
S402: The ground device determines a plurality of cyclic codebooks based on a satellite motion direction and the first codebook.

The plurality of cyclic codebooks include a second codebook.

S403: The ground device sends the plurality of cyclic codebooks to the satellite.

S404: The satellite performs data transmission by using the cyclic codebook.

S405: The terminal device sends a signal-to-noise ratio fluctuation requirement update request message to the satellite.

The signal-to-noise ratio fluctuation requirement update request message includes an absolute value of a scanning granularity or an updated value of the scanning granularity.

S406: The satellite sends the signal-to-noise ratio fluctuation requirement update request message to the ground device.

S407: The ground device updates the scanning granularity based on the absolute value of the scanning granularity or the updated value of the scanning granularity.

S408: The ground device determines an updated cyclic codebook based on an updated scanning granularity.

S409: The ground device sends the updated cyclic codebook to the satellite.

For specific implementations of S401 to S409, refer to the corresponding descriptions in Example 1 and Example 2. For example, S401, S402, S407, and S408 performed by the ground device are similar to a manner in which the satellite performs the foregoing steps. Details are not described herein again.

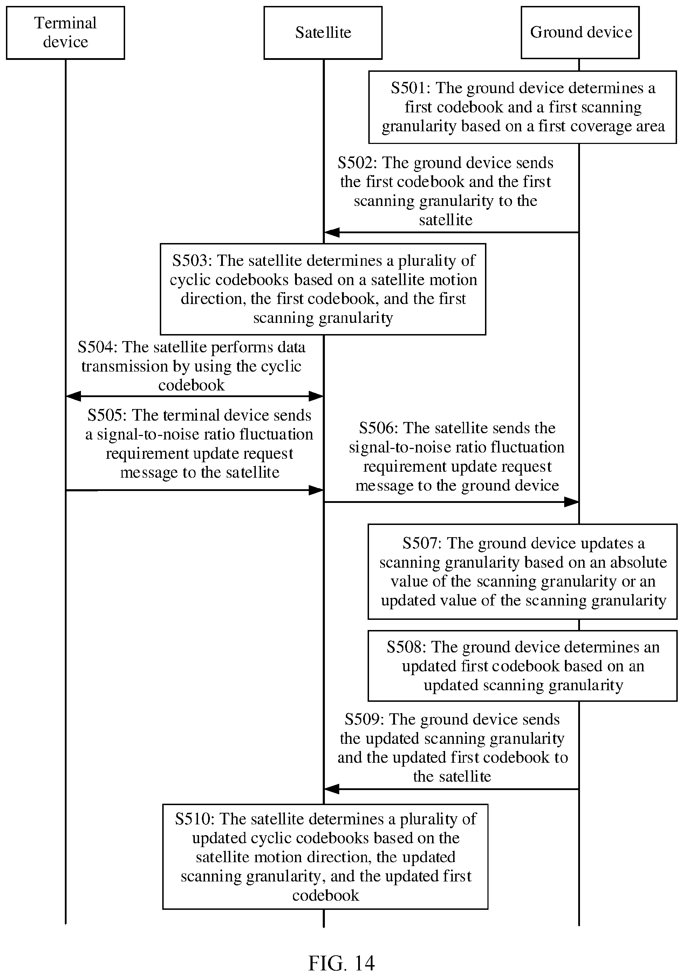

Example 5: It is assumed that a ground device determines a first codebook, a terminal device requests to update the codebook, and a satellite forwards a request message and codebook information, and determines and updates the cyclic codebook. For example, FIG. 14 is a schematic flowchart of a fifth beam coverage method according to this application. The method is implemented through interaction between the satellite, the terminal device, and the ground device, and includes the following steps:

> S501: The ground device determines a first codebook and a first scanning granularity based on a first coverage area.
> S502: The ground device sends the first codebook and the first scanning granularity to the satellite.
> S503: The satellite determines a plurality of cyclic codebooks based on a satellite motion direction, the first codebook, and the first scanning granularity.

The plurality of cyclic codebooks include a second codebook.

S504: The satellite performs data transmission by using the cyclic codebook.

S505: The terminal device sends a signal-to-noise ratio fluctuation requirement update request message to the satellite.

The signal-to-noise ratio fluctuation requirement update request message includes an absolute value of a scanning granularity or an updated value of the scanning granularity.

S506: The satellite sends the signal-to-noise ratio fluctuation requirement update request message to the ground device.

S507: The ground device updates the scanning granularity based on the absolute value of the scanning granularity or the updated value of the scanning granularity.

S508. The ground device determines an updated first codebook based on an updated scanning granularity.

S509: The ground device sends the updated scanning granularity and the updated first codebook to the satellite.

S510: The satellite determines a plurality of updated cyclic codebooks based on the satellite motion direction, the updated scanning granularity, and the updated first codebook.

For specific implementations of S501 to S510, refer to the corresponding descriptions in Example 1 and Example 2. For example, S501, S507, and S508 performed by the ground device are similar to a manner in which the satellite performs the foregoing steps. Details are not described herein again.

To implement the functions in the methods provided in this application, the apparatus or the device provided in this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Division into modules in this application is an example, is merely logical function division, and may be other division in an actual implementation. In addition, functional modules in embodiments of this application may be integrated into one processor, may exist alone physically, or two or more modules may be integrated into one module. The integrated module may be implemented in a form of hardware, or may be implemented in a form of a software functional module.

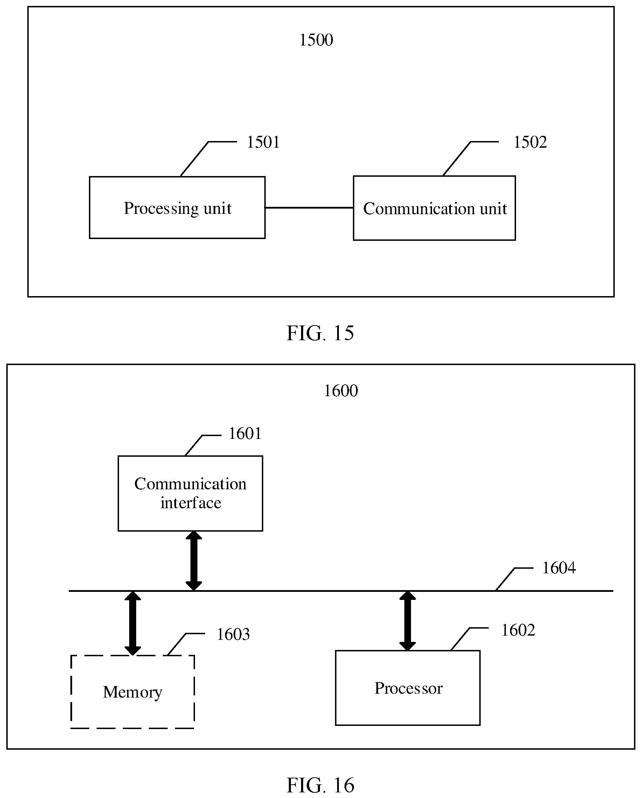

FIG. 15 is a diagram of an apparatus according to this application. The apparatus may include a one-to-one corresponding module for performing the methods/operations/steps/actions described in the method embodiments corresponding to FIG. 5 to FIG. 14. The module may be a hardware circuit, may be software, or may be implemented by a combination of a hardware circuit and software. For example, the apparatus may be referred to as a beam coverage apparatus, or may be referred to as a communication apparatus.

The apparatus 1500 includes a processing unit 1501 and a communication unit 1502, configured to implement the method performed by the terminal device or the satellite device in the foregoing embodiments.

In a possible implementation, the processing unit 1501 is configured to determine a first codebook based on a first coverage area. The processing unit 1501 is further configured to determine a second codebook based on a satellite motion direction and the first codebook. The communication unit 1502 is configured to perform data transmission based on the second codebook.

Optionally, that the processing unit 1501 is configured to determine the second codebook based on the satellite motion direction and the first codebook includes:

> obtaining, based on the satellite motion direction and a first beam set or a first beam position set corresponding to the first codebook, a second beam set or a second beam position set that is adjacent to the first beam set or the first beam position set for the first time in the satellite motion direction;
> determining a scanning granularity based on a codebook storage requirement and a signal-to-noise ratio fluctuation requirement; and
> determining the second codebook based on the scanning granularity, a codebook corresponding to the second beam set or the second beam position set, and the first codebook.

Optionally, that the processing unit 1501 is configured to determine the first codebook based on the first coverage area includes:

> determining the first codebook based on the first coverage area and an orientation of a satellite antenna panel; or
determining the first codebook based on the first coverage area, a rotation speed of the earth, and an earth beam position.

Optionally, that the processing unit 1501 is configured to obtain, based on the satellite motion direction and the first beam set corresponding to the first codebook, the second beam set that is adjacent to the first beam set for the first time in the satellite motion direction includes:

determining an angle parameter of each beam in the first beam set based on the orientation of the satellite antenna panel; and
obtaining, based on the angle parameter of each beam in the first beam set, each beam that is adjacent to each beam in the first beam set for the first time in the satellite motion direction.

The second beam set includes each beam that is adjacent to each beam in the first beam set for the first time in the satellite motion direction.

Optionally, that the processing unit 1501 is configured to obtain, based on the satellite motion direction and the first beam position set corresponding to the first codebook, the second beam position set that is adjacent to the first beam position set for the first time in the satellite motion direction includes:

determining an angle parameter of each beam position in the first beam position set based on the satellite motion direction and the rotation speed of the earth; and
obtaining, based on the angle parameter of each beam position in the first beam position set, each beam position that is adjacent to each beam position in the first beam position set for the first time in the satellite motion direction.

The second beam position set includes each beam position that is adjacent to each beam position in the first beam position set for the first time in the satellite motion direction.

Optionally, a relationship among the scanning granularity, the signal-to-noise ratio fluctuation requirement, and the codebook storage requirement satisfies: when a first scanning granularity is less than a second scanning granularity, a first signal-to-noise ratio fluctuation requirement is less than a second signal-to-noise ratio fluctuation requirement, and a first codebook storage requirement is greater than a second codebook storage requirement.

Optionally, the communication unit 1502 is further configured to receive a signal-to-noise ratio fluctuation requirement update request message, where the signal-to-noise ratio fluctuation requirement update request message includes an absolute value of the scanning granularity or an updated value of the scanning granularity. The processing unit 1501 is further configured to: update the scanning granularity based on the absolute value of the scanning granularity or the updated value of the scanning granularity; and determine an updated second codebook based on an updated scanning granularity.

For specific execution procedures of the processing unit 1501 and the communication unit 1502 in this implementation, refer to the descriptions in the foregoing method embodiments. Details are not described herein again. According to the beam coverage method implemented by the apparatus, the first codebook may be first determined, and then a small quantity of codebooks are designed in the satellite motion direction based on the first codebook. The small quantity of codebooks include the second codebook (namely, a codebook used for data transmission at a current moment). Therefore, in a satellite motion process, seamless coverage can be implemented based on the small quantity of codebooks. This helps reduce computing overheads and storage overheads of the satellite.

In a possible implementation, the processing unit 1501 is configured to obtain a second codebook, and the communication unit 1502 is configured to perform data transmission based on the second codebook.

Optionally, that the processing unit 1501 is configured to obtain the second codebook includes:

obtaining a first codebook and a scanning granularity; and
determining the second codebook based on the first codebook and the scanning granularity.

Optionally, the communication unit 1502 is further configured to send a signal-to-noise ratio fluctuation requirement update request message to the satellite, where the signal-to-noise ratio fluctuation requirement update request message includes an absolute value of the scanning granularity or an updated value of the scanning granularity.

For specific execution procedures of the processing unit 1501 and the communication unit 1502 in this implementation, refer to the descriptions in the foregoing method embodiments. Details are not described herein again. According to the beam coverage method implemented by the apparatus, the terminal device can directly obtain the second codebook used for data transmission, thereby implementing data transmission between the terminal device and the satellite.

The following describes a device including the plurality of functional units shown in FIG. 15. The device in this application includes the plurality of functional units shown in FIG. 15. FIG. 16 is a diagram of a device according to this application. The device is configured to implement the beam coverage method in the foregoing method embodiments. The device 1600 may alternatively be a chip system. It may be understood that the device 1600 may be, for example, a terminal device, or may be a satellite device.

The device 1600 includes a communication interface 1601 and a processor 1602. The communication interface 1601 may be, for example, a transceiver, an interface, a bus, a circuit, or an apparatus that can implement a transceiver function. The communication interface 1601 is configured to communicate with another device through a transmission medium, so that the device 1600 may communicate with the another device. Optionally, the communication interface 1601 may implement a function of the communication unit 1502. The processor 1602 is configured to perform a processing-related operation.

In a possible implementation, the processor 1602 is configured to: determine a first codebook based on a first coverage area; and determine a second codebook based on a satellite motion direction and the first codebook. The communication interface 1601 is configured to perform data transmission based on the second codebook.

Optionally, that the processor 1602 is configured to determine the second codebook based on the satellite motion direction and the first codebook includes:

> obtaining, based on the satellite motion direction and a first beam set or a first beam position set corresponding to the first codebook, a second beam set or a second beam position set that is adjacent to the first beam set or the first beam position set for the first time in the satellite motion direction;
> determining a scanning granularity based on a codebook storage requirement and a signal-to-noise ratio fluctuation requirement; and
> determining the second codebook based on the scanning granularity, a codebook corresponding to the second beam set or the second beam position set, and the first codebook.

Optionally, that the processor 1602 is configured to determine the first codebook based on the first coverage area includes:

> determining the first codebook based on the first coverage area and an orientation of a satellite antenna panel; or
> determining the first codebook based on the first coverage area, a rotation speed of the earth, and an earth beam position.

Optionally, that the processor 1602 is configured to obtain, based on the satellite motion direction and the first beam set corresponding to the first codebook, the second beam set that is adjacent to the first beam set for the first time in the satellite motion direction includes:

> determining an angle parameter of each beam in the first beam set based on the orientation of the satellite antenna panel; and
obtaining, based on the angle parameter of each beam in the first beam set, each beam that is adjacent to each beam in the first beam set for the first time in the satellite motion direction.

The second beam set includes each beam that is adjacent to each beam in the first beam set for the first time in the satellite motion direction.

Optionally, that the processor 1602 is configured to obtain, based on the satellite motion direction and the first beam position set corresponding to the first codebook, the second beam position set that is adjacent to the first beam position set for the first time in the satellite motion direction includes:

> determining an angle parameter of each beam position in the first beam position set based on the satellite motion direction and the rotation speed of the earth; and
> obtaining, based on the angle parameter of each beam position in the first beam position set, each beam position that is adjacent to each beam position in the first beam position set for the first time in the satellite motion direction.

The second beam position set includes each beam position that is adjacent to each beam position in the first beam position set for the first time in the satellite motion direction.

Optionally, a relationship among the scanning granularity, the signal-to-noise ratio fluctuation requirement, and the codebook storage requirement satisfies: when a first scanning granularity is less than a second scanning granularity, a first signal-to-noise ratio fluctuation requirement is less than a second signal-to-noise ratio fluctuation requirement, and a first codebook storage requirement is greater than a second codebook storage requirement.

Optionally, the communication interface 1601 is further configured to receive a signal-to-noise ratio fluctuation requirement update request message, where the signal-to-noise ratio fluctuation requirement update request message includes an absolute value of the scanning granularity or an updated value of the scanning granularity. The processor 1602 is further configured to: update the scanning granularity based on the absolute value of the scanning granularity or the updated value of the scanning granularity; and determine an updated second codebook based on an updated scanning granularity.

For specific execution procedures of the processor 1602 and the communication interface 1601 in this implementation, refer to the descriptions in the foregoing method embodiments. Details are not described herein again. According to the beam coverage method implemented by the apparatus, the first codebook may be first determined, and then a small quantity of codebooks are designed in the satellite motion direction based on the first codebook. The small quantity of codebooks include the second codebook (namely, a codebook used for data transmission at a current moment). Therefore, in a satellite motion process, seamless coverage can be implemented based on the small quantity of codebooks. This helps reduce computing overheads and storage overheads of the satellite.

In a possible implementation, the processor 1602 is configured to obtain a second codebook, and the communication interface 1601 is configured to perform data transmission based on the second codebook.

Optionally, that the processor 1602 is configured to obtain the second codebook includes:

obtaining a first codebook and a scanning granularity; and
determining the second codebook based on the first codebook and the scanning granularity.

Optionally, the communication interface 1601 is further configured to send a signal-to-noise ratio fluctuation requirement update request message to the satellite, where the signal-to-noise ratio fluctuation requirement update request message includes an absolute value of the scanning granularity or an updated value of the scanning granularity.

For specific execution procedures of the communication interface 1601 and the processor 1602 in this implementation, refer to the descriptions in the foregoing method embodiments. Details are not described herein again. According to the beam coverage method implemented by the apparatus, the terminal device can directly obtain the second codebook used for data transmission, thereby implementing data transmission between the terminal device and the satellite.

Optionally, the device 1600 may further include at least one memory 1603, configured to store program instructions and/or data. In an implementation, the memory is coupled to the processor. The coupling in this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. Optionally, the at least one memory and the processor are integrated together.

In this application, a specific connection medium between the communication interface, the processor, and the memory is not limited. For example, the memory, the processor, and the communication interface are connected through a bus. The bus 1604 is indicated by a thick line in FIG. 16. A manner of a connection between other components is merely an example for description, and is not limited thereto. The bus may be classified into an address bus, a data bus, a control bus, and the like. For ease of description, the bus in FIG. 16 is indicated by only one thick line, but this does not indicate that there is only one bus or one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of instructions or a data structure and that can be accessed by a computer, but is not limited thereto. Alternatively, the memory in this application may be a circuit or any other apparatus that can implement a storage function, and is configured to store program instructions and/or data.

This application provides a communication system. The communication system includes one or more of the terminal device, the satellite device, and the ground device in the embodiments corresponding to FIG. 5 to FIG. 14.

This application provides a computer-readable storage medium. The computer-readable storage medium stores a program or instructions. When the program or the instructions are run on a computer, the computer is enabled to perform the beam coverage methods in the embodiments corresponding to FIG. 5 to FIG. 14.

This application provides a computer program product. The computer program product includes instructions. When the instructions are run on a computer, the computer is enabled to perform the beam coverage methods in the embodiments corresponding to FIG. 5 to FIG. 14.

This application provides a chip or a chip system. The chip or the chip system includes at least one processor and an interface. The interface and the at least one processor are interconnected through a line. The at least one processor is configured to run a computer program or instructions, to perform the beam coverage methods in the embodiments corresponding to FIG. 5 to FIG. 14.

The interface in the chip may be an input/output interface, a pin, a circuit, or the like.

The chip system may be a system on chip (system on chip, SoC), may be a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in this application may be implemented by software, hardware, firmware, or any combination thereof. When software is used to implement the technical solutions, all or some of the embodiments may be implemented in a form of a computer program product. The computer program product includes one or more computer instructions. When the computer program instructions are loaded and executed on the computer, the procedures or functions according to this application are all or partially generated. The computer may be a general-purpose computer, a dedicated computer, a computer network, a network device, a terminal device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A beam coverage method, comprising:

   determining a first codebook based on a first coverage area;
   determining a second codebook based on a satellite motion direction and the first codebook; and
   performing data transmission data based on the second codebook.

2. The method according to claim 1, wherein the determining a second codebook based on a satellite motion direction and the first codebook comprises:

   obtaining, based on the satellite motion direction and a first beam set or a first beam position set corresponding to the first codebook, a second beam set or a second beam position set that is adjacent to the first beam set or the first beam position set for the first time in the satellite motion direction;
   determining a scanning granularity based on a codebook storage requirement and a signal-to-noise ratio fluctuation requirement; and
   determining the second codebook based on the scanning granularity, a codebook corresponding to the second beam set or the second beam position set, and the first codebook.

3. The method according to claim 2, wherein the determining a first codebook based on a first coverage area comprises:

   determining the first codebook based on the first coverage area and an orientation of a satellite antenna panel; or
   determining the first codebook based on the first coverage area, a rotation speed of the earth, and an earth beam position.

4. The method according to claim 2 or 3, wherein the obtaining, based on the satellite motion direction and a first beam set corresponding to the first codebook, a second beam set that is adjacent to the first beam set for the first time in the satellite motion direction comprises:

   determining an angle parameter of each beam in the first beam set based on the orientation of the satellite antenna panel; and
   obtaining, based on the angle parameter of each beam in the first beam set, each beam that is adjacent to each beam in the first beam set for the first time in the satellite motion direction, wherein
   the second beam set comprises each beam that is adjacent to each beam in the first beam set for the first time in the satellite motion direction.

5. The method according to claim 2 or 3, wherein the obtaining, based on the satellite motion direction and a first beam position set corresponding to the first codebook, a second beam position set that is adjacent to the first beam position set for the first time in the satellite motion direction comprises:

determining an angle parameter of each beam position in the first beam position set based on the satellite motion direction and the rotation speed of the earth; and
obtaining, based on the angle parameter of each beam position in the first beam position set, each beam position that is adjacent to each beam position in the first beam position set for the first time in the satellite motion direction, wherein the second beam position set comprises each beam position that is adjacent to each beam position in the first beam position set for the first time in the satellite motion direction.

6. The method according to claim 2, wherein a relationship among the scanning granularity, the signal-to-noise ratio fluctuation requirement, and the codebook storage requirement satisfies:
when a first scanning granularity is less than a second scanning granularity, a first signal-to-noise ratio fluctuation requirement is less than a second signal-to-noise ratio fluctuation requirement, and a first codebook storage requirement is greater than a second codebook storage requirement.

7. The method according to claim 1 or 2, wherein the method further comprises:

receiving a signal-to-noise ratio fluctuation requirement update request message, wherein the signal-to-noise ratio fluctuation requirement update request message comprises an absolute value of the scanning granularity or an updated value of the scanning granularity;
updating the scanning granularity based on the absolute value of the scanning granularity or the updated value of the scanning granularity; and
determining an updated second codebook based on an updated scanning granularity.

8. A beam coverage method, comprising:

obtaining a second codebook; and
performing data transmission based on the second codebook.

9. The method according to claim 8, wherein the obtaining a second codebook comprises:

obtaining a first codebook and a scanning granularity; and
determining the second codebook based on the first codebook and the scanning granularity.

10. The method according to claim 8 or 9, wherein the method further comprises:
sending a signal-to-noise ratio fluctuation requirement update request message to a satellite, wherein the signal-to-noise ratio fluctuation requirement update request message comprises an absolute value of the scanning granularity or an updated value of the scanning granularity.

11. A communication apparatus, comprising:

a processing unit, configured to determine a first codebook based on a first coverage area, wherein
the processing unit is further configured to determine a second codebook based on a satellite motion direction and the first codebook; and
a communication unit, configured to perform data transmission based on the second codebook.

12. The apparatus according to claim 11, wherein that the processing unit is configured to determine the second codebook based on the satellite motion direction and the first codebook comprises:

obtaining, based on the satellite motion direction and a first beam set or a first beam position set corresponding to the first codebook, a second beam set or a second beam position set that is adjacent to the first beam set or the first beam position set for the first time in the satellite motion direction;
determining a scanning granularity based on a codebook storage requirement and a signal-to-noise ratio fluctuation requirement; and
determining the second codebook based on the scanning granularity, a codebook corresponding to the second beam set or the second beam position set, and the first codebook.

13. The apparatus according to claim 12, wherein that the processing unit is configured to determine the first codebook based on the first coverage area comprises:

determining the first codebook based on the first coverage area and an orientation of a satellite antenna panel; or
determining the first codebook based on the first coverage area, a rotation speed of the earth, and an earth beam position.

**14.** The apparatus according to claim 12 or 13, wherein that the processing unit is configured to obtain, based on the satellite motion direction and the first beam set corresponding to the first codebook, the second beam set that is adjacent to the first beam set for the first time in the satellite motion direction comprises:

determining an angle parameter of each beam in the first beam set based on the orientation of the satellite antenna panel; and

obtaining, based on the angle parameter of each beam in the first beam set, each beam that is adjacent to each beam in the first beam set for the first time in the satellite motion direction, wherein

the second beam set comprises each beam that is adjacent to each beam in the first beam set for the first time in the satellite motion direction.

**15.** The apparatus according to claim 12 or 13, wherein that the processing unit is configured to obtain, based on the satellite motion direction and the first beam position set corresponding to the first codebook, the second beam position set that is adjacent to the first beam position set for the first time in the satellite motion direction comprises:

determining an angle parameter of each beam position in the first beam position set based on the satellite motion direction and the rotation speed of the earth; and

obtaining, based on the angle parameter of each beam position in the first beam position set, each beam position that is adjacent to each beam position in the first beam position set for the first time in the satellite motion direction, wherein the second beam position set comprises each beam position that is adjacent to each beam position in the first beam position set for the first time in the satellite motion direction.

**16.** The apparatus according to claim 12, wherein a relationship among the scanning granularity, the signal-to-noise ratio fluctuation requirement, and the codebook storage requirement satisfies: when a first scanning granularity is less than a second scanning granularity, a first signal-to-noise ratio fluctuation requirement is less than a second signal-to-noise ratio fluctuation requirement, and a first codebook storage requirement is greater than a second codebook storage requirement.

**17.** The apparatus according to claim 11 or 12, wherein the communication unit is further configured to receive a signal-to-noise ratio fluctuation requirement update request message, wherein the signal-to-noise ratio fluctuation requirement update request message comprises an absolute value of the scanning granularity or an updated value of the scanning granularity; and
the processing unit is further configured to:

update the scanning granularity based on the absolute value of the scanning granularity or the updated value of the scanning granularity; and determine an updated second codebook based on an updated scanning granularity.

**18.** A communication apparatus, comprising:

a processing unit, configured to obtain a second codebook; and
a communication unit, configured to perform data transmission based on the second codebook.

**19.** The apparatus according to claim 18, wherein that the processing unit is configured to obtain the second codebook comprises:

obtaining a first codebook and a scanning granularity; and
determining the second codebook based on the first codebook and the scanning granularity.

**20.** The apparatus according to claim 18 or 19, wherein the communication unit is further configured to:
send a signal-to-noise ratio fluctuation requirement update request message to a satellite, wherein the signal-to-noise ratio fluctuation requirement update request message comprises an absolute value of the scanning granularity or an updated value of the scanning granularity.

**21.** A communication apparatus, comprising a memory, a processor, and a communication interface, wherein the communication interface is configured to receive a signal or send a signal, the memory is configured to store instructions or a computer program, and the processor is configured to execute the computer program or the instructions stored in the memory, to enable the communication apparatus to perform the method according to any one of claims 1 to 7.

**22.** A communication apparatus, comprising a memory, a processor, and a communication interface, wherein the communication interface is configured to receive a signal or send a signal, the memory is configured to store instructions or a computer program, and the processor is configured to execute the computer program or the instructions stored in the memory, to enable the communication apparatus to perform the method according to any one of claims 8 to 10.

23. A communication system, comprising a satellite device and a terminal device, wherein

the satellite device is configured to perform the method according to any one of claims 1 to 7; and
the terminal device is configured to perform the method according to any one of claims 8 to 10.

24. A chip system, comprising a processor and an interface, wherein
the processor is configured to read instructions to perform the method according to any one of claims 1 to 10.

25. A computer-readable storage medium, wherein the computer-readable storage medium stores instructions, and when the instructions are run on a computer, the computer is enabled to perform the method according to any one of claims 1 to 10.

26. A computer program product, wherein the computer program product comprises instructions, and when the instructions are run on a computer, the computer is enabled to perform the method according to any one of claims 1 to 10.

FIG. 1

Coverage area formed by a beam

FIG. 2

Coverage area formed by a beam

FIG. 3a

FIG. 3b

Satellite

Codebook

Beam or beam
position
corresponding
to a codebook

FIG. 4a

Satellite motion direction

Satellite

Codebook 1
Codebook 2
Codebook 3
Codebook 4

Translation

FIG. 4b

A satellite determines a first codebook based on a first coverage area — S101

The satellite determines a second codebook based on a satellite motion direction and the first codebook — S102

The satellite performs data transmission based on the second codebook — S103

FIG. 5

First codebook

Second codebook

Satellite

Codebook corresponding to a second beam set or a second beam position set

Satellite motion direction

FIG. 6

Large scanning
granularity

Small scanning
granularity

Signal-to-noise ratio
fluctuation

FIG. 7

Azimuth $\varphi$

Angle parameter of a beam a

$(\theta_a, \varphi_a)$

$(\theta_n, \varphi_n)$ Angle parameter of a beam n

Satellite motion direction

$(\theta_b, \varphi_b)$

Angle parameter of a beam b

Pitch angle $\theta$

FIG. 8

Satellite motion direction

Service beam position
(beam) set 1

Service beam position
(beam) set 2

Earth-fixed
codebook 1

Earth-fixed
codebook 2

Earth-fixed
codebook 3

Earth-fixed
codebook 4
(Earth-fixed
codebook 1)

FIG. 9

Satellite motion direction

Current
codebook
interpolation
processing
solution

Solution in this
application

FIG. 10

A terminal device obtains a second codebook — S201

The terminal device performs data transmission based on the second codebook — S202

FIG. 11

Terminal device

Satellite

S301: The satellite determines a first codebook based on a first coverage area

S302: The satellite determines a plurality of cyclic codebooks based on a satellite motion direction and the first codebook

S303: The satellite performs data transmission by using the cyclic codebook

S304: The terminal device sends a signal-to-noise ratio fluctuation requirement update request message to the satellite

S305: The satellite updates a scanning granularity based on an absolute value of the scanning granularity or an updated value of the scanning granularity

S306: The satellite determines an updated cyclic codebook based on an updated scanning granularity

FIG. 12

| Terminal device | Satellite | Ground device |
|---|---|---|

S401: The ground device determines a first codebook based on a first coverage area

S402: The ground device determines a plurality of cyclic codebooks based on a satellite motion direction and the first codebook

S403: The ground device sends the plurality of cyclic codebooks to the satellite

S404: The satellite performs data transmission by using the cyclic codebook

S405: The terminal device sends a signal-to-noise ratio fluctuation requirement update request message to the satellite

S406: The satellite sends the signal-to-noise ratio fluctuation requirement update request message to the ground device

S407: The ground device updates a scanning granularity based on an absolute value of the scanning granularity or an updated value of the scanning granularity

S408: The ground device determines an updated cyclic codebook based on an updated scanning granularity

S409: The ground device sends the updated cyclic codebook to the satellite

FIG. 13

| Terminal device | | Satellite | | Ground device |
|---|---|---|---|---|

S501: The ground device determines a first codebook and a first scanning granularity based on a first coverage area

S502: The ground device sends the first codebook and the first scanning granularity to the satellite

S503: The satellite determines a plurality of cyclic codebooks based on a satellite motion direction, the first codebook, and the first scanning granularity

S504: The satellite performs data transmission by using the cyclic codebook

S505: The terminal device sends a signal-to-noise ratio fluctuation requirement update request message to the satellite

S506: The satellite sends the signal-to-noise ratio fluctuation requirement update request message to the ground device

S507: The ground device updates a scanning granularity based on an absolute value of the scanning granularity or an updated value of the scanning granularity

S508: The ground device determines an updated first codebook based on an updated scanning granularity

S509: The ground device sends the updated scanning granularity and the updated first codebook to the satellite

S510: The satellite determines a plurality of updated cyclic codebooks based on the satellite motion direction, the updated scanning granularity, and the updated first codebook

FIG. 14

1500

1501

Processing unit

1502

Communication unit

FIG. 15

1600

1601

Communication
interface

1604

1603

Memory

1602

Processor

FIG. 16

## INTERNATIONAL SEARCH REPORT

| International application No. |
| --- |
| **PCT/CN2023/122118** |

**A.  CLASSIFICATION OF SUBJECT MATTER**

H04B 7/185(2006.01)i

According to International Patent Classification (IPC) or to both national classification and IPC

**B.  FIELDS SEARCHED**

Minimum documentation searched (classification system followed by classification symbols)

IPC: H04B H04L

Documentation searched other than minimum documentation to the extent that such documents are included in the fields searched

Electronic data base consulted during the international search (name of data base and, where practicable, search terms used)

CNTXT, ENTXTC, ENTXT, CJFD, DWPI, 3GPP: 波束, 覆盖, 码本, 粒度, 卫星, 信噪比, 运动方向, 更新; beam, coverage, codebook, granularity, satellite, SNR, movement direction, update

**C.  DOCUMENTS CONSIDERED TO BE RELEVANT**

| Category* | Citation of document, with indication, where appropriate, of the relevant passages | Relevant to claim No. |
| --- | --- | --- |
| X | CN 112335189 A (QUALCOMM INC.) 05 February 2021 (2021-02-05) description, paragraphs 36-118, and figures 1-9 | 8, 9, 18, 19, 22-26 |
| Y | CN 112335189 A (QUALCOMM INC.) 05 February 2021 (2021-02-05) description, paragraphs 36-118, and figures 1-9 | 1, 11, 21, 23-26 |
| Y | CN 113783601 A (10TH RESEARCH INSTITUTE OF CHINA ELECTRONICS TECHNOLOGY GROUP CORP.) 10 December 2021 (2021-12-10) description, paragraphs 19-32, and figures 1-8 | 1, 11, 21, 23-26 |
| X | WO 2017193991 A1 (NTT DOCOMO INC.) 16 November 2017 (2017-11-16) description, page 3, line 14 to page 10, line 11, and figures 1-5 | 8, 9, 18, 19, 22-26 |
| A | CN 102025404 A (ZTE CORP.) 20 April 2011 (2011-04-20) entire document | 1-26 |
| A | CN 107682054 A (CHINA ACADEMY OF TELECOMMUNICATIONS TECHNOLOGY) 09 February 2018 (2018-02-09) entire document | 1-26 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 December 2023** | **02 January 2024** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/122118** |

**C.    DOCUMENTS CONSIDERED TO BE RELEVANT**

| Category* | Citation of document, with indication, where appropriate, of the relevant passages | Relevant to claim No. |
|---|---|---|
| A | CN 113497646 A (SAMSUNG ELECTRONICS CO., LTD.) 12 October 2021 (2021-10-12) entire document | 1-26 |

Form PCT/ISA/210 (second sheet) (July 2022)

**INTERNATIONAL SEARCH REPORT**
Information on patent family members

International application No.

**PCT/CN2023/122118**

| Patent document cited in search report | | | Publication date (day/month/year) | Patent family member(s) | | | Publication date (day/month/year) |
|---|---|---|---|---|---|---|---|
| CN | 112335189 | A | 05 February 2021 | WO | 2020006063 | A1 | 02 January 2020 |
| | | | | WO | 2020006063 | A8 | 29 October 2020 |
| | | | | US | 2020007203 | A1 | 02 January 2020 |
| | | | | US | 10892807 | B2 | 12 January 2021 |
| | | | | EP | 3815260 | A1 | 05 May 2021 |
| CN | 113783601 | A | 10 December 2021 | | None | | |
| WO | 2017193991 | A1 | 16 November 2017 | | None | | |
| CN | 102025404 | A | 20 April 2011 | | None | | |
| CN | 107682054 | A | 09 February 2018 | | None | | |
| CN | 113497646 | A | 12 October 2021 | TW | 202139617 | A | 16 October 2021 |
| | | | | US | 2022094419 | A1 | 24 March 2022 |
| | | | | US | 11804890 | B2 | 31 October 2023 |
| | | | | DE | 102021100239 | A1 | 07 October 2021 |
| | | | | KR | 20210124895 | A | 15 October 2021 |
| | | | | US | 2021328653 | A1 | 21 October 2021 |
| | | | | US | 11616563 | B2 | 28 March 2023 |

Form PCT/ISA/210 (patent family annex) (July 2022)

**REFERENCES CITED IN THE DESCRIPTION**

**Patent documents cited in the description**

- CN 202211303533